# EUROPEAN PATENT SPECIFICATION

(11) **EP 2 128 975 B1**
(45) Date of publication and mention of the grant of the patent: **27.08.2014**
(21) Application number: 07846028.4
(22) Date of filing: 05.12.2007
(51) Int. Cl.: H02P 6/16, G01D 5/244, H02P 25/02, H03M 1/10, H02P 29/02

(54) **CONTROL DEVICE AND METHOD FOR DETERMINING THE MOTOR ROTOR POSITION**
STEUEREINRICHTUNG UND VERFAHREN ZUR BESTIMMUNG DER ROTORLAGE EINES MOTORS
DISPOSITIF ET PROCÉDÉ DE CONTRÔLE DE DÉTERMINATION DE LA POSITION DE ROTOR D'UN MOTEUR

(30) Priority: 05.12.2006 CN 200610157298; 30.08.2007 CN 200710076826
(43) Date of publication of application: 02.12.2009
(73) Proprietor: Byd Company Limited, Shenzhen, Guangdong 518119 (CN)
(72) Inventor: TANG, Xiaohua, Shenzhen Guangdong 518119 (CN); YU, Ming, Shenzhen Guangdong 518119 (CN); ZHOU, Xuguang, Shenzhen Guangdong 518119 (CN); GONG, Jian, Shenzhen Guangdong 518119 (CN); LIU, Nan, Shenzhen Guangdong 518119 (CN); YANG, Guangming, Shenzhen Guangdong 518119 (CN); XU, Yingwu, Shenzhen Guangdong 518119 (CN); LUO, Ting, Shenzhen Guangdong 518119 (CN); LIU, Kai, Shenzhen Guangdong 518119 (CN); JIANG, Xianhong, Shenzhen Guangdong 518119 (CN); WU, Qiaoqiao, Shenzhen Guangdong 518119 (CN)
(74) Representative: HOFFMANN EITLE
(86) International application number: PCT/CN2007/071182
(87) International publication number: WO 2008/067769

(56) References cited:
- EP-A1- 1 796 257
- CN-A- 1 801 596
- CN-A- 1 838 523
- JP-A- 2000 197 383
- JP-A- 2002 165 482
- US-A1- 2006 125 439

## Description

### FIELD OF INVENTION

This invention involves a control method related to a motor rotor, and, in particular, involves a method and an apparatus for the detection of a motor rotor position and to fault-tolerance processing with respect to the motor rotor.

### BACKGROUND

During the motor rotor control process, it is necessary to detect the rotor position. The existing technology uses a resolver to detect the rotor rotational position and to send out a simulation signal and to then get a digital signal quantity calculated through a specific decoding unit. The vehicle speed can be calculated by the ECU of the electric vehicle based on the current position signal and the previous position signal. Moreover, the necessary increase in driver voltage for the electric motor rotor can be computed and a PWM driver signal can be achieved according to the voltage. Thus the resolver can provide the preset three-phase AC voltage to the stator winding of the electric motor based on the PWM driver signal.

However, in automobile production, it is easy to make a mistake in positioning the angle of the resolver used to detect the position of the motor rotor. The existing technology solves the issue by comparing the current position angle with the previous sampled position angle, and, since the electric motor rotor position angle cannot have a large increase occurring within a short period of time, it can thus be determined whether the current sampled rotor position is correct or not. If the difference between the current position angle and the previous sampled position angle exceeds a reasonable range, then the sampled position angle is considered incorrect and the current sampled position angle signal is discarded. Then a different strategy is employed to deal with the erroneous angle where a correct speed value obtained based on the previous sampled rotor position is used to correct the current sampled speed value resulting in a corrected current rotor position angle. Lastly the correcting value is used to control the electric motor.

But when the motor rotor position continues to be in error, although this type of method can process the rotor error, but in this process, the accumulated errors resulted from the calculations of the rotor positions may lead to a larger difference between the current correct rotor position sampled and the related calculated previous rotor position. If this particular sampled current correct rotor position is used to control the motor, then the motor rotation speed may have an increase that can lead to an overly large electric current resulting in damage to power components.

EP 1 796 257 A1 relates to a position detecting device detecting the pole position of a motor. A position detector detects basic-wave component signals in sensor signals and executes position calculation. A correction unit calculates signal information representing at least one of a gain, an offset and a phase by a phase detector from the basic-wave component signals and makes correction based on the calculated signal information such that a position detection error is zero.

US 2006/0125439 A1 relates to a rotary sensor that outputs two analog signals, such as one sine wave and one cosine wave has multiple periods within one period of the electrical angle of a motor is employed. The motor is energized at each position for a specified length of time upon its startup by using multiple electrical angles corresponding to the multiple candidate absolute angles obtained from the rotary sensor signal as the initial position of the motor, and the electrical angle at which the motor acceleration becomes maximum is determined as the absolute angle. While the motor drive is in operation, on the other hand, the phase difference θΔ between the phase of the motor at the counter electromotive voltage and the control phase is directly computed from the parameters of the motor, sensed current, voltage command and angle speed so as to correct the shifted position. A high-efficiency motor drive unit with improved maintainability of rotary sensor and improved accuracy of sensing the magnet pole position of a permanent magnet synchronous motor that accelerates and decelerates very quickly in a wide range of speed is realized.

### SUMMARY

The main purposes of this invention are: to provide a method and an apparatus for electric vehicle motor control and rotor position detection and fault-tolerance processing, to resolve the problem in the prior art, that when the particular sampled current correct rotor position is used to control the motor, in continual position errors, then the motor rotation speed may have an increase that can lead to an overly large electric current resulting in damage to power components.

This object is accomplished by the subject-matter of the independent claims 1 and 5. The dependent claims describe advantageous embodiments.

One example provides a method for electric vehicle motor control and rotor position detection and fault-tolerance processing, comprising the steps of:
A) detecting a current correct rotor position angle θₙ₊₁ during a current sampling cycle; comparing said current correct rotor position angle θₙ₊₁ with a calculated previous sampled rotor position angle θₙ, and getting the difference Δθₙ₊₁ between the current correct rotor position angle θₙ₊₁ and the calculated previous sampled rotor position angle θₙ;
B) determining whether the difference Δθₙ₊₁ exceeds a specified rotor angle limit maximum Δθmax or not;
C) if the difference Δθₙ₊₁ exceeds the specified rotor angle limit maximum Δθmax, discarding the current correct rotor position angle θₙ₊₁, and computing the summation between the calculated previous sampled rotor position angle θₙ and the specified rotor angle limit maximum Δθmax, and using the summation as a correcting value Δθ_{n+1'} to control the motor.

Another example provides an apparatus for electric vehicle motor control and rotor position detection and fault-tolerance processing, comprising:
a correct rotor position comparing module, is for comparing a current correct rotor position angle θₙ₊₁ during a current sampling cycle and a calculated previous rotor position angle θₙ during a previous sampling cycle and getting the difference Δθₙ₊₁ between the current correct rotor position angle θₙ₊₁ and the calculated previous sampled rotor position angle θₙ;
a correct rotor position processing module, is for determining whether the difference Δθₙ₊₁ exceeds a specified rotor angle limit maximum Δθmax or not, and if it exceeds, processing a position correcting module;
said position correcting module performing a processing is for discarding the current correct rotor position angle θₙ₊₁, and computing the summation between the calculated previous sampled rotor position angle θₙ and the specified rotor angle limit maximum Δθmax, and using the summation Δθ_{n+1'} as a correcting value to control the motor, wherein, n=0,1, 2, 3.......and other integers.

According to the invention, comparing a current rotor position angle θₙ₊₁ with a calculated previous sampled rotor position angle θₙ, when the difference Δθₙ₊₁ between them exceeds a specified rotor angle limit maximum Δθmax, discarding the current rotor position angle θₙ₊₁, and computing the summation between the calculated previous sampled rotor position angle θn and the specified rotor angle limit maximum Δθmax, and using the summation as a correcting value to control the motor. Thus resolves the problem in the prior art, that when the particular sampled current correct rotor position is used to control the motor in continual position errors, then the motor rotation speed may have an increase that can lead to an overly large electric current resulting in damage to power components. The embodiments of the invention can narrow the gap of the calculated previous sampled rotor position angle θn and the current correct rotor position angle θₙ + 1 step by step, thus smoothing the changes of the motor rotation speed. This procedure therefore leads to slight electric current changes, and result in no damage to power components.

### DESCRIPTION OF FIGURES

Figure 1 is a simplified structural diagram for the electric vehicle electric driver system of an embodiment of this invention.
Figure 2 is a flow chart of the method for electric vehicle motor control and rotor position detection and fault-tolerance processing provided by an embodiment of this invention.
Figure 3 is a control flow diagram of a specific example of the method for electric vehicle motor control and rotor position detection and fault-tolerance processing provided by an embodiment of this invention.
Figure 4 is a flow chart of the motor rotor position control and detection and fault-tolerance processing method implementation example provided by an embodiment of this invention.
Figure 5 is a structural diagram of a motor rotor position control and detection and fault-tolerance processing apparatus provided by an embodiment of this invention.

### DETAILED DESCRIPTIONS OF THE PREFERRED EMBODIMENTS

In order to describing the purpose, embodiments and advantages of the invention more clearly, a description of the invention will be detailed with the figures. Obviously, the description just explains the invention and does not limit the invention.

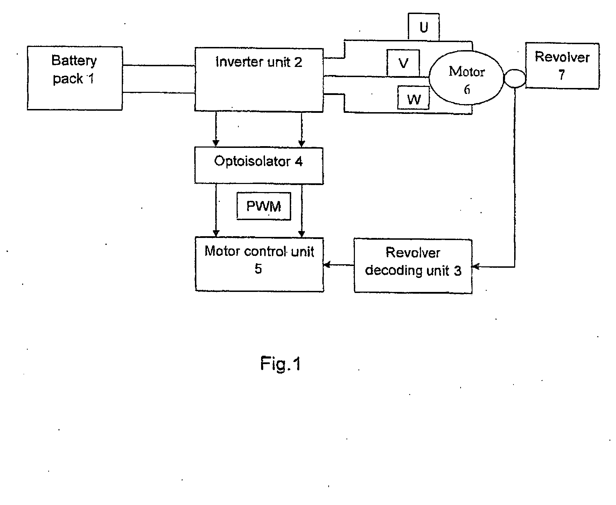

Figure 1 is a simplified structural diagram for the electric vehicle electric driver system of one embodiment of this invention, According to fig.1, the electric vehicle electric driver system comprises a battery pack 1, an inverter unit 2, a resolver decoding unit 3, an optoisolator 4, a motor control unit 5, a motor 6 and a resolver 7.

Among them, the battery pack 1 uses a high-power battery pack with a voltage 200V-330V which is the energy source of the entire electric driver system. The motor control unit 5 is used to calculate the PWM driver signal and send the signal to the inverter unit 2 through the driver isolation unit 4. The inverter unit 2 is comprised of three intelligent power modules (IPM) (IGBT can also be used as a type of power components transistors, not shown). Each IPM is divided into top and bottom bridges and the IPM top bridge input is connected to the positive terminal of the battery pack 1. The bottom bridge is connected to the negative terminal of battery pack 1. Each connection point between each IPM is connected to the three-phase coil (U-phase, V-phase, W-phase) of the electric motor 6. The electric motor 6 is a PMSM (permanent magnetism synchronous machine) that is used as the electric vehicle power output source. The revolver 7 is connected to the electric motor 6 rotor and is used to detect the rotational angle position of the electric motor 6 rotors, and send the position to the resolver decoding unit 3. The revolver decoding unit 3 receives the signal from the resolver 7 to decode the rotor position and sends it to the connected motor control unit 5.

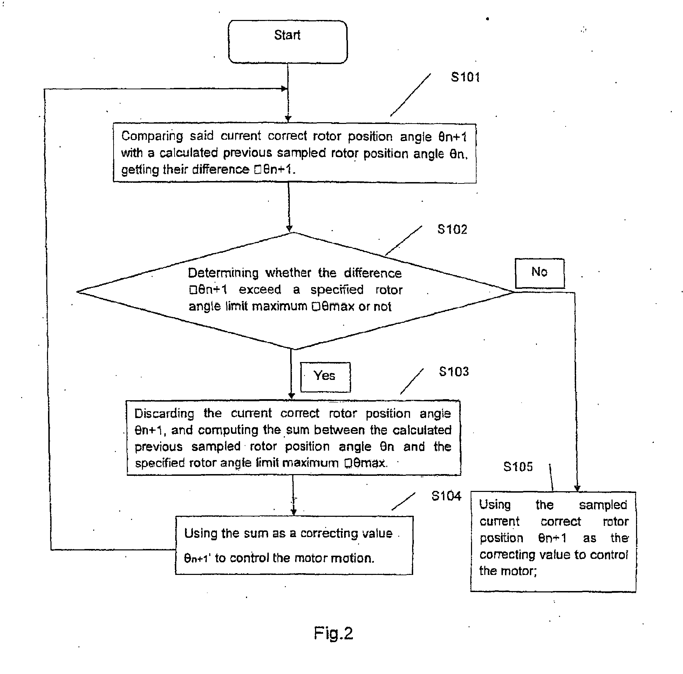

As is shown in the flow chart in fig.2, the method for electric vehicle motor control and rotor position detection and fault-tolerance processing comprises the following steps:

During Step S101 comprises the steps of comparing said current correct rotor position angle θₙ₊₁ with a calculated previous sampled rotor position angle θₙ and getting the difference Δ_{θn+1} between the current correct rotor position angle θₙ₊₁ and the calculated previous sampled rotor position angle θₙ, Δ_{θn+1}=θₙ₊₁-θₙ.

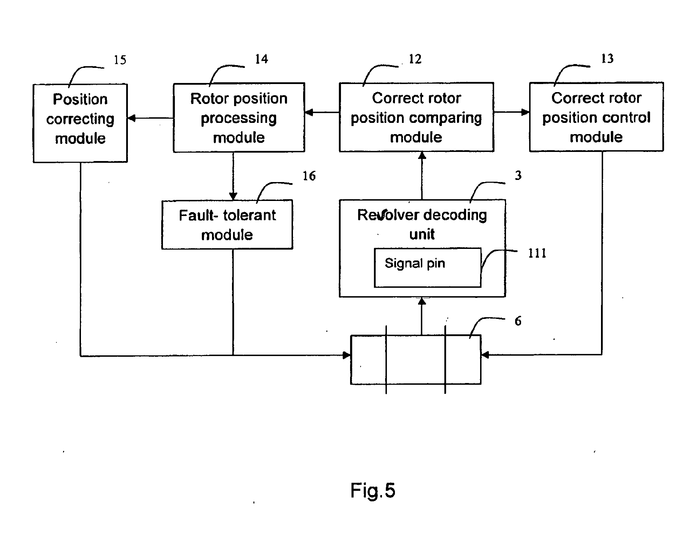

Wherein, in every sampling cycle, the resolver 7 detects the rotational angle position of the electric motor 6 rotor and sends the position signal θ to the revolver decoding unit 3. The revolver decoding unit 3 is a decoding chip, having a signal pin 111, as is shown in fig.5. The decoding chip can determine whether the sine signal and cosine signal which are from the resolver 7, is correct or not and the signal pin 111 can indicate the reception of correct rotor position.

During step S102, the procedure determines whether the difference Δ_{θn-1} exceeds the specified rotor angle limit maximum Δθmax of the motor rotor 6 or not. During the implementation process, the maximum value Δθmax is obtained by carrying out motor experiments. That is through testing the largest rotor position change that the particular motor 6 can withstand, based on the current speed, when in maximum acceleration and maximum deceleration declaration, is determined for getting a reasonable range, and a determination is made for then getting the rotor angle limit maximum value Δθmax. When the difference exceeds the limit maximum value, it will cause an overly large electric current of the motor 6, which can result in damages to the motor power components. Furthermore, the limit maximum value Δθmax is related to the difference value that can be tolerated by the power components connected to that motor 6. When that limit value Δθmax is exceeded, it can cause abnormal power components operation. Certainly, that limit maximum value Δθmax is also linked to the passenger riding comfort. For example, if the limit value Δθmax is too large, the riding comfort is not so good to the passengers.

During step S102, when the difference Δθₙ₊₁ between the sampled current correct rotor position θₙ₊₁ and the calculated previous rotor position θₙ does not exceed the specified motor rotor position limit maximum Δθmax, step S105 is processed, and the sampled current correct rotor position θₙ₊₁ is used to control the motor motion.

However, during the implementation process, when the difference Δ_{θn+1} between current correct rotor position θₙ₊₁ and the calculated previous rotor position θₙ does exceed the specified motor rotor position limit maximum Δ_{θmax}, then at this time, the sampled current correct rotor position θₙ₊₁ is determined to be in error, and step S103 is processed.

When step S103 is processed, the current correct rotor position angle θₙ₊₁ is discarded and the summation θₙ + Δθₘₐₓ between the calculated previous rotor position θₙ and the limit value maximum Δ_{θmax} is computed.

Then in step S104, the control procedure uses the summation value θₙ₊₁ (θₙ₊₁'= θₙ + Δθmax) as the correcting value to control the motor operation. In other words and it uses that value θ_{n+1'} to adjust the PWM waveform to change the three-phase voltage added on the motor 6 to control the motor 6 operation.

During the implementation process, the next time when the motor rotor position continues to be in error and acquires a current correct rotor position θₙ₊₁, steps S101-S105 are cycled, and in S101, the control procedure uses that value θ_{n+1'} as the calculated previous rotor position θₙ and continues to compare it to the current sampled rotor position θₙ₊₁ when there is an error.

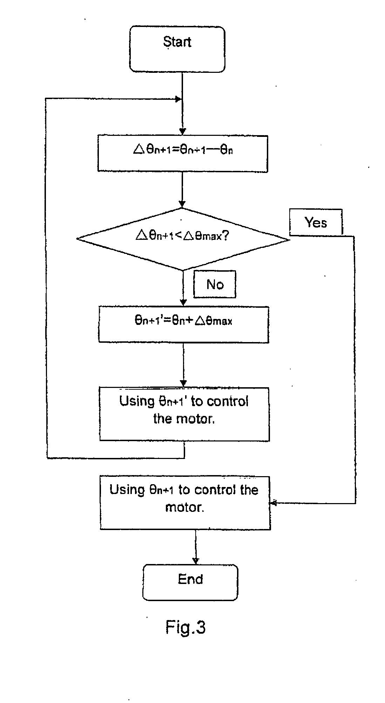

For instance, as is shown in fig.3, when n=0, starts, if the motor rotor position continues to be in error, the resolver decoding unit 3 acquires a current correct rotor position θ₁=2000, and the calculated previous rotor position is θ₀=1800. The specified motor rotor position limit maximum value is Δθmax =80. The difference is Δθ₁=2000 - 1800 = 200 which is greater than the specified motor rotor position limit maximum value Δθmax =80. At this time, it uses the summation of the calculated previous rotor position obtained when there is continuous fault which is θ₀=1800 and the maximum value of the motor rotor position specified limit maximum which is Δθmax =80 to control the motor operation at θ₁'=θ₀+Δθₘₐₓ =1800+80=1880. Since the difference between 1880 and 1800 does not exceed the maximum value of the specified motor rotor position limit maximum, by using 1880 to control the motor will not cause a jump in the increase in the motor rotational speed, resulting in a smaller change in the electric current.

During the next sampling cycle, n=1, that is when the motor rotor position continues to be in error and acquires a current correct rotor position θ₂, the control procedure is using the summation θ_{1'} obtained from the previous calculation as the calculated previous rotor position θ₁. The summation continues to be compared with the current rotor position θ₂ sampled during this cycle. If the current sampled correct rotor position is θ₂=2005, thus Δθ₂=2005 - 1880 = 125 which is still greater than the specified motor rotor position limit maximum value Δθmax = 80, then the control procedure continues to use θ_{2'}=1880 + 80 = 1960 to control the motor operation.

During the next cycle, n=2, If the sampled current rotor position θ₃ for the next cycle is 2010, the difference between 2010 and 1960 is Δθ₃= 2010-1960=50 which does not exceed the specified motor rotor position limit maximum value Δθₘₐₓ =80. Then the sampled current rotor position θ₃=2010 is used to control the motor operation.

Therefore, by using the above procedure when the motor rotor position changes from continuous error state to correct state, the sampled current correct motor rotor position is assessed and corrected. This helps to prevent the motor electric current and rotational speed from having sudden changes. It can also ensure the motor control continuity and can improve the comfort of the vehicle ride. In this procedure, the sampling period can be very short, for example it can be any value between 10 µs and 100 µs, such as 20 µs, and hence the rotational speed of the vehicle can not change suddenly, such that a control procedure using the calculated previous value to be a calculated correct value can not affect the whole accuracy of the calculation.

Furthermore, when no current correct position value θₙ₊₁ is sampled, and the difference between the current correct position value and the calculated previous position value sampled in the previous cycle is very large, the correct motor rotor position can be calculated and corrected via the regular fault-tolerance processing method, according to the calculated previous position value θₙ sampled in the previous cycle, such that the process is the same as what is mentioned before.

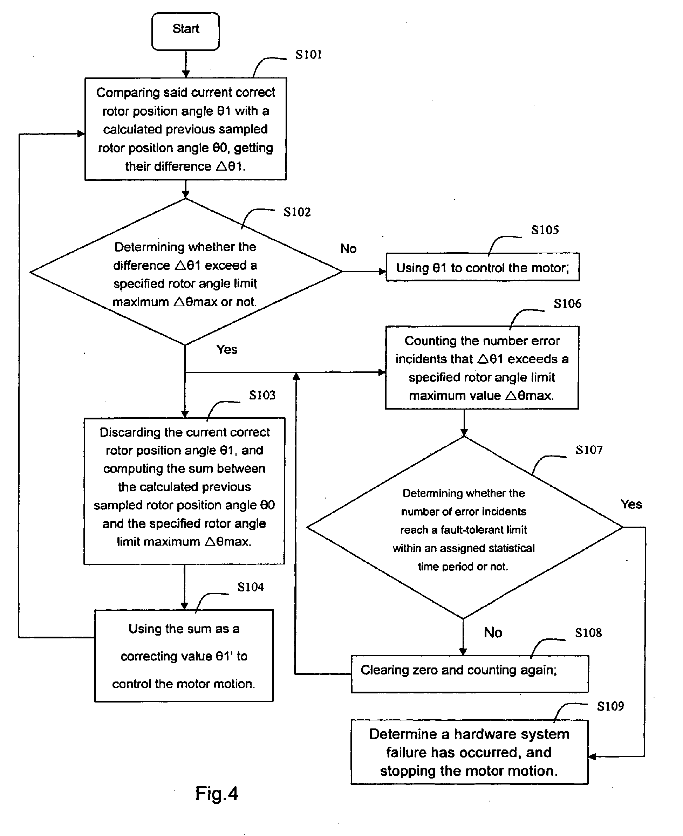

Under normal condition, the consistent external interference cannot result in the error position signal sampled by resolver 7. As shown in fig.4, according to an embodiment of the invention, wherein the method further comprises the following steps: during step S106, the control procedure counts the number of one or more error incidents that said difference Δθₙ₊₁ exceeds a specified rotor angle limit maximum value Δθmax. During step S107, the procdure determines whether the number of error incidents reaches a fault-tolerant limit within an assigned statistical time period, if the number of error incidents does not exceed the fault-tolerant limit within the assigned statistical time period. Step S108 will restart the counting of the number of one or more error incidents from zero; if the number of error incidents reaches a fault-tolerant limit within the assigned statistical time period and step S109 will determine a hardware system failure has occurred, and stop the motor motion.

Thus, via increasing the frequency of motor error detection in an assigned statistical time period, even though the resolver 7 can have errors in detecting the motor rotor position due to external electromagnetic and vibration types of interferences, or other faults from some related hardware components or transmitting circuits, the resolver error handling is very effective in preventing the motor from losing control and loss, and ensuring the safety of the system.

For example, if the number of errors is less than 4 times in 3 minutes, this can be considered as an extreme coincidental condition and it is normal to carry out the procedure for restarting the counting of the number of one or more error incidents from zero. Moreover, if there is a hardware breakdown, the sampled data can be in error every time, so the number of one or more error incidents reaches the fault-tolerant limit. For example, when the frequency of error is greater than 4 times in 3 minutes, the procedure is then determining that a hardware system failure has occurred.

In this procedure, when determining on the statistical time period, two choices are possible: too short of a period, which can cause a greater probability of misjudgment that can lead to hardware faulty protection. If the period is too long, that is the statistical time period is too long, it can also increase the risk to the vehicle. Even though the hardware has a problem in deed and it may not be maintained for a period of time without protection, this type of hardware damage increases the risk in control safety, which can be extremely harmful.

Figure 5 shows a structure of an apparatus for electric vehicle motor control and rotor position detection and fault-tolerance processing provided by an embodiment of this invention.

When the motor rotor position continues to be in error, through the existing technology, the current motor rotor position is calculated. Moreover, the rotor position is continuously calculated, and when a correct motor rotor position appears, that correct motor rotor position is sampled.

During the implementation process, that correct motor rotor position and the calculated rotor position when there is an error are sampled through the resolver 7 and decoding unit 3 is a decoding chip. The decoding chip has a signal pin 111, and it can estimate whether the sine signal and cosine signal from the resolver 7 are correct or not, and the signal pin 111 can indicate the reception of the correct rotor position once the correct rotor position appears.

According to one embodiment of the invention, an apparatus for electric vehicle motor control and rotor position detection and fault-tolerance processing, comprises: a correct rotor position comparing module 12, a correct rotor position control module 13, a rotor position processing module 14, a position correcting module 15, a fault- tolerant module 16 (selectively). Hereby, the output terminals of said correct rotor position comparing module 12 are connected to the input terminals of said rotor position processing module 14 and said correct rotor position control module 13; the output terminals of said rotor position processing module 14 are connected to the input terminals of said position correcting module 15 and said fault- tolerant module 16; the output terminals of said position correcting module 15, said fault- tolerant module 16 and said correct rotor position control module 13 are connected to motor control unit 5 (not shown in fig.5) separately, to control the motor 6 motion.

Wherein, the correct rotor position comparing module 12 compares the sampled current correct rotor position θₙ₊₁ and the calculated previous rotor position θₙ. Then it gets the difference Δθₙ₊₁ between the sampled current correct rotor position θₙ₊₁ and the calculated previous rotor position θₙ.

The rotor position processing module 14 determines whether the difference Δθₙ₊₁ exceeds a specified rotor angle limit maximum value Δθₘₐₓ or not. If the difference Δθₙ₊₁ exceeds the specified motor rotor position limit maximum value Δθmax, then the position correcting module 15 will proceed, and the fault- tolerant module 16 will proceed if required ; if it does not exceed, the correct rotor position control module 13 will proceed.

The position correcting module 15 discards the sampled current rotor position θₙ₊₁ and calculates the summation between the calculated precious rotor position θₙ and the maximum value Δθmax of the specified motor rotor position limit maximum. That summation θₙ₊₁' is used as the correcting value to control the motor operation.

The correct rotor position control module 13 uses the sampled current correct rotor position θₙ₊₁ to control the motor motion.

The fault- tolerant module 16 can be used selectively - it counts the number of one or more error incidents that the said difference Δθₙ₊₁ exceeds a specified rotor angle limit maximum value Δθmax, which is processed by the rotor position processing module 14. If the number of error incidents does not exceed the fault-tolerant limit within the assigned statistical time period, the apparatus is restarting the counting of the number of one or more error incidents from zero; if it reaches or exceeds the limit, the apparatus is determining a hardware system failure has occurred, and is stopping the motor motion. The assigned statistical time period is preferably 3 minutes and the fault-tolerant limit is preferably 4.

In the control procedure and apparatus, the output terminals of the position correcting module 15 and correct rotor position control module 13 are used to output the relative rotor position angle to the motor control unit 5 separately, that is the correct the rotor position angles θ_{n+1'} and the correct rotor position angles θₙ₊₁, so that the motor control unit 5 can control the motor motion with the rotor position angle. The output of the fault- tolerant module 16 is used to inform the motor control unit 5 to stop the motor 6 motion.

While the present invention has been described with reference to certain preferred embodiments, it is to be understood that the present invention is not a limit maximum of such specific embodiments. Variations and modifications are possible within the scope of the appended claims.

## Claims

1. A method for electric vehicle motor control and rotor position detection and fault-tolerance processing, comprising the steps of:
A) detecting a current correct rotor position angle θₙ₊₁ during a current sampling cycle; comparing said current correct rotor position angle θₙ₊₁ with a calculated previous sampled rotor position angle θₙ and getting the difference Δθₙ₊₁ between the current correct rotor position angle θₙ₊₁ and the calculated previous sampled rotor position angle θₙ;
B) determining whether the difference Δθₙ₊₁ exceeds a specified rotor angle limit maximum Δθmax or not;
C) if the difference Δθₙ₊₁ exceeds a specified rotor angle limit maximum Δθₘₐₓ, discarding the current correct rotor position angle θₙ₊₁, and computing the sum between the calculated previous sampled rotor position angle θₙ and the specified rotor angle limit maximum Δθmax, and using the sum as a correcting value θₙ₊₁' to control the motor motion;
**characterized in that** the method further comprises the steps of:
D) counting the number of one or more error incidents that the said difference Δθn+1 exceeds a specified rotor angle limit maximum Δθmax;
E) determining whether the number of error incidents reaches a fault-tolerance limit maximum within an assigned statistical time period or not;
F) if the number of error incidents does not exceed the fault-tolerance limit maximum within the assigned statistical time period, restarting the counting of the number of one or more error incidents from zero; and if the number of error incidents reaches a fault-tolerance limit maximum within an assigned statistical time period, determining a hardware system failure has occurred, and stopping the motor motion.

2. The method of claim 1 wherein said step C also comprises the sub steps of: if the difference Δθₙ₊₁ dose not exceed a specified rotor angle limit maximum Δθₘₐₓ, using the sampled current correct rotor position θₙ₊₁ as the correcting value to control the motor;

3. The method of claim 1 wherein when getting a current rotor position angle θₙ₊₁, and the rotor position continues to be in error in the next sampling cycle, continuing the steps A-C, wherein the correcting value θ_{n+1'} from the current cycle is used as the calculated previous rotor position θₙ for the next sampling cycle.

4. The method of claim 1 wherein the assigned statistical time period is 3 minutes and the fault-tolerance limit maximum is 4.

5. An apparatus for electric vehicle motor control and rotor position detection and fault-tolerance processing, comprising:
a correct rotor position comparing module (12) for comparing a current correct rotor position angle θₙ₊₁ during a current sampling cycle and a calculated previous rotor position angle θₙ during a previous sampling cycle and getting the difference Δθₙ₊₁ between the current correct rotor position angle θₙ₊₁ and the calculated previous sampled rotor position angle θₙ;
a correct rotor position processing module (14) for determining whether the difference Δθₙ₊₁ exceeds a specified rotor angle limit maximum Δθₘₐₓ or not, and if it exceeds, processing a position correcting module (15);
said position correcting module (15) performing a processing for discarding the current correct rotor position angle θₙ₊₁, and computing the sum between the calculated previous sampled rotor position angle θₙ and the specified rotor angle limit maximum Δθmax, and using the sum as a correcting value θ_{n+1'} to control the motor; and
a fault- tolerance module (16), is for counting the number of one or more error incidents that the difference Δθₙ₊₁ exceeds a specified rotor angle limit maximum Δθmax, and determining whether the number of error incidents reaches a fault-tolerance limit maximum within an assigned statistical time period or not; and if the number of error incidents does not exceed the fault-tolerance limit maximum within the assigned statistical time period, restarting the counting of the number of one or more error incidents from zero; and if the number of error incidents reaches a fault-tolerance limit maximum within an assigned statistical time period, determining a hardware system failure has occurred, and stopping the motor.

6. The apparatus of claim 5 also comprising: a correct rotor position control module (13) for using the sampled current correct rotor position θₙ₊₁ as the correcting value to control the motor, when said correct rotor position module (14) determines that the difference Δθₙ₊₁ dose not exceed a specified rotor angle limit maximum Δθₘₐₓ, the correct rotor position control module (13) is processed.

7. The apparatus of claim 5 wherein the assigned statistical time period is 3 minutes and the fault-tolerance limit maximum is 4.

## Patentansprüche

1. Verfahren zur elektrischen Fahrzeugmotorregelung und Rotorpositionsermittlung und Fehlertoleranzverarbeitung, umfassend folgende Schritte:
A) Ermitteln eines aktuellen richtigen Rotorpositionswinkels θn+1 während eines aktuellen Abtastzyklus; Vergleichen des aktuellen richtigen Rotorpositionswinkels θn+1 mit einem berechneten vorhergehenden abgetasteten Rotorpositionswinkel θn und Erzielen der Differenz Δθn+1 zwischen dem aktuellen richtigen Rotorpositionswinkel θn+1 und dem berechneten vorhergehenden abgetasteten Rotorpositionswinkel θn;
B) Bestimmen, ob die Differenz Δθn+1 über einen vorgegebenen Rotorwinkel-Grenzhöchstwert Δθmax hinausgeht oder nicht;
C) falls die Differenz Δθn+1 über einen vorgegebenen Rotorwinkel-Grenzhöchstwert Δθmax hinausgeht, Verwerfen des aktuellen richtigen Rotorpositionswinkels θn+1 und Berechnen der Summe zwischen dem berechneten vorhergehenden abgetasteten Rotorpositionswipkel θn und dem vorgegebenen Rotorwinkel-Grenzhöchstwert Δθmax und Verwenden der Summe als Korrekturwert θn+1', um die Motorbewegung zu regeln;
**dadurch gekennzeichnet, dass** das Verfahren ferner folgende Schritte umfasst:
D) Zählen der Anzahl von einem oder mehreren Fehlerereignissen, bei denen die Differenz Δθn+1 über einen vorgegebenen Rotorwinkel-Grenzhöchstwert Δθmax hinausgeht;
E) Bestimmen, ob die Anzahl von Fehlerereignissen einen Fehlertoleranz-Grenzhöchstwert innerhalb eines zugewiesenen statistischen Zeitraums erreicht oder nicht;
F) falls die Anzahl von Fehlerereignissen den Fehlertoleranz-Grenzhöchstwert innerhalb des zugewiesenen statistischen Zeitraums nicht überschreitet, Wiederbeginnen des Zählens der Anzahl von einem oder mehreren Fehlerereignissen von null; und falls die Anzahl von Fehlerereignissen einen Fehlertoleranz-Grenzhöchstwert innerhalb eines zugewiesenen statistischen Zeitraums erreicht, Bestimmen, dass ein Hardware-Systemausfall aufgetreten ist, und Anhalten der Motorbewegung.

2. Verfahren nach Anspruch 1, wobei Schritt C auch die folgenden Teilschritte umfasst: falls die Differenz AGn+1 einen vorgegebenen Rotorwinkel-Grenzhöchstwert Δθmax nicht überschreitet, Verwenden der abgetasteten aktuellen richtigen Rotorposition θn+1 als Korrekturwert, um den Motor zu regeln.

3. Verfahren nach Anspruch 1, wobei, wenn ein aktueller Rotorpositionswinkel θn+1 erzielt wird und die Rotorposition im nächsten Abtastzyklus weiterhin fehlerhaft ist, die Schritte A bis C fortgeführt werden, wobei der Korrekturwert θn+1' aus dem aktuellen Zyklus als die berechnete vorherige Rotorposition θn für den nächsten Abtastzyklus verwendet wird.

4. Verfahren nach Anspruch 1, wobei der zugewiesene statistische Zeitraum 3 Minuten lang dauert und der Fehlertoleranz-Grenzhöchstwert gleich 4 ist.

5. Gerät zur elektrischen Fahrzeugmotorregelung und Rotorpositionsermittlung und Fehlertoleranzverarbeitung, umfassend:
ein Modul (12) zum Vergleichen einer richtigen Rotorposition, um einen aktuellen richtigen Rotorpositionswinkel θn+1 während eines aktuellen Abtastzyklus und einen berechneten vorhergehenden Rotorpositionswinkel θn während eines vorhergehenden Abtastzyklus zu vergleichen und um die Differenz Δθn+1 zwischen dem aktuellen richtigen Rotorpositionswinkel θn+1 und dem berechneten vorhergehenden abgetasteten Rotorpositionswinkel θn zu erzielen;
ein Modul (14) zum Verarbeiten der richtigen Rotorposition, um zu bestimmen, ob die Differenz Δθn+1 über einen vorgegebenen Rotorwinkel-Grenzhöchstwert Δθmax hinausgeht oder nicht, und falls sie darüber hinausgeht, Verarbeiten eines Positionskorrekturmoduls (15) ;
wobei das Positionskorrekturmodul (15) eine Verarbeitung ausführt, um den aktuellen richtigen Rotorpositionswinkel θn+1 zu verwerfen und um die Summe zwischen dem berechneten vorhergehenden abgetasteten Rotorpositionswinkel θn und dem vorgegebenen Rotorwinkel-Grenzhöchstwert Δθmax zu berechnen und die Summe als Korrekturwert θn+1' zu verwenden, um den Motor zu regeln; und
ein Fehlertoleranzmodul (16), um die Anzahl von einem oder mehreren Fehlerereignissen zu zählen, bei denen die Differenz Δθn+1 über einen vorgegebenen Rotorwinkel-Grenzhöchstwert Δθmax hinausgeht, und um zu bestimmen, ob die Anzahl von Fehlerereignissen einen Fehlertoleranz-Grenzhöchstwert innerhalb eines zugewiesenen statistischen Zeitraums erreicht oder nicht; und falls die Anzahl von Fehlerereignissen den Fehlertoleranz-Grenzhöchstwert innerhalb des zugewiesenen statistischen Zeitraums nicht überschreitet, um das Zählen der Anzahl von einem oder mehreren Fehlerereignissen von null wieder zu beginnen; und falls die Anzahl von Fehlerereignissen einen Fehlertoleranz-Grenzhöchstwert innerhalb eines zugewiesenen statistischen Zeitraums erreicht, um zu bestimmen, dass ein Hardware-Systemausfall aufgetreten ist, und die Motorbewegung anzuhalten.

6. Gerät nach Anspruch 5, ebenfalls umfassend: ein Modul (13) zum Regeln der richtigen Rotorposition, um die abgetastete aktuelle richtige Rotorposition θn+1 als den richtigen Wert zu verwenden, um den Motor zu regeln, und wenn das Modul (14) für die richtige Rotorposition bestimmt, dass die Differenz Δθn+1 einen vorgegebenen Rotorwinkel-Grenzhöchstwert Δθmax nicht überschreitet, das Modul (13) zum Regeln der richtigen Rotorposition verarbeitet wird.

7. Gerät nach Anspruch 5, wobei der zugewiesene statistische Zeitraum 3 Minuten lang dauert und der Fehlertoleranz-Grenzhöchstwert gleich 4 ist.

## Revendications

1. Procédé pour la commande de moteur de véhicule électrique et la détection de position de rotor et le traitement de tolérance aux pannes, comprenant les étapes qui consistent :
A) à détecter un angle de position de rotor correcte actuelle θₙ₋₁ pendant un cycle d'échantillonnage actuel ; à comparer ledit angle de position de rotor correcte actuelle θₙ₊₁ à un angle de position de rotor échantillonnée précédente calculée θₙ et à obtenir la différence Δθₙ₊₁ entre l'angle de position de rotor correcte actuelle θₙ₊₁ et l'angle de position de rotor échantillonnée précédente calculée θₙ ;
B) à déterminer si la différence Δθₙ₊₁ dépasse ou non un maximum de limite d'angle de rotor spécifié Δθₘₐₓ ;
C) à rejeter l'angle de position de rotor correcte actuelle θₙ₊₁, si la différence Δθₙ₊₁ dépasse un maximum de limite d'angle de rotor spécifié Δθₘₐₓ, et à calculer la somme de l'angle de position de rotor échantillonnée précédente calculée θₙ et du maximum de limite d'angle de rotor spécifié Δθₘₐₓ, et à utiliser la somme comme valeur de correction θ_{n+1'} pour commander le mouvement du moteur ;
**caractérisé en ce que** le procédé comprend en outre les étapes qui consistent :
D) à compter le nombre d'un ou de plusieurs incidents dus à des erreurs où ladite différence Δθₙ₊₁ dépasse un maximum de limite d'angle de rotor spécifié Δθₘₐₓ ;
E) à déterminer si le nombre d'incidents dus à des erreurs atteint ou non un maximum de limite de tolérance aux pannes dans une période statistique attribuée ;
F) à recommencer le comptage du nombre d'un ou de plusieurs incidents dus à des erreurs depuis zéro, si le nombre d'incidents dus à des erreurs ne dépasse pas le maximum de limite de tolérance aux pannes dans la période statistique attribuée ; et à déterminer qu'une défaillance de système de matériel s'est produite, si le nombre d'incidents dus à des erreurs atteint un maximum de limite de tolérance aux pannes dans une période statistique attribuée, et à arrêter le mouvement du moteur.

2. Procédé de la revendication 1, dans lequel ladite étape C comprend également la sous-étape qui consiste : à utiliser la position de rotor correcte actuelle échantillonnée θₙ₊₁ comme étant la valeur de correction pour commander le moteur, si la différence Δθₙ₊₁ ne dépasse pas un maximum de limite d'angle de rotor spécifié Δθₘₐₓ ;

3. Procédé de la revendication 1, dans lequel lorsqu'on obtient un angle de position de rotor actuelle θₙ₊₁, et la position de rotor continue à être erronée dans le cycle d'échantillonnage suivant, on poursuit les étapes de A à C, où la valeur de correction θ_{n+1'} à partir du cycle actuel est utilisée comme étant la position de rotor précédente calculée θₙ pour le cycle d'échantillonnage suivant.

4. Procédé de la revendication 1, dans lequel la période statistique attribuée est de 3 minutes et le maximum de limite de tolérance aux pannes est de 4.

5. Appareil pour la commande de moteur de véhicule électrique et la détection de position de rotor et le traitement de tolérance aux pannes, comprenant :
un module de comparaison de position de rotor correcte (12) destiné à comparer un angle de position de rotor correcte actuelle θₙ₊₁ pendant un cycle d'échantillonnage actuel et un angle de position de rotor précédente calculée θₙ pendant un cycle d'échantillonnage précédent et à obtenir la différence Δθₙ₊₁ entre l'angle de position de rotor correcte actuelle θₙ₊₁ et l'angle de position de rotor échantillonnée précédente calculée θₙ ;
un module de traitement de position de rotor correcte (14) destiné à déterminer si la différence Δθₙ₊₁ dépasse ou non un maximum de limite d'angle de rotor spécifié Δθₘₐₓ, et si elle dépasse, à traiter un module de correction de position (15) ;
ledit module de correction de position (15) exécutant un traitement pour rejeter l'angle de position de rotor correcte actuelle θₙ₊₁, et calculant la somme de l'angle de position de rotor échantillonnée précédente calculée θₙ et du maximum de limite d'angle de rotor spécifié Δθₘₐₓ, et utilisant la somme comme valeur de correction θ_{n+1'} pour commander le moteur ; et
un module de tolérance aux pannes (16), est destiné à compter le nombre d'un ou de plusieurs incidents dus à des erreurs où la différence Δθₙ₊₁ dépasse un maximum de limite d'angle de rotor spécifié Δθₘₐₓ, et à déterminer si le nombre d'incidents dus à des erreurs atteint ou non un maximum de limite de tolérance aux pannes dans une période statistique attribuée ; et à recommencer le comptage du nombre d'un ou de plusieurs incidents dus à des erreurs depuis zéro, si le nombre d'incidents dus à des erreurs ne dépasse pas le maximum de limite de tolérance aux pannes dans la période statistique attribuée, et à déterminer qu'une défaillance de système de matériel s'est produite, si le nombre d'incidents dus à des erreurs atteint un maximum de limite de tolérance aux pannes dans une période statistique attribuée, et à arrêter le mouvement du moteur.

6. Appareil de la revendication 5, comprenant également : un module de commande de position de rotor correcte (13) destiné à utiliser la position de rotor correcte actuelle échantillonnée θₙ₊₁ comme étant la valeur de correction pour commander le moteur, lorsque ledit module de position de rotor correcte (14) détermine que la différence Δθₙ₊₁ ne dépasse pas un maximum de limite d'angle de rotor spécifié Δθₘₐₓ, le module de commande de position de rotor correcte (13) est traité.

7. Appareil de la revendication 5, dans lequel la période statistique attribuée est de 3 minutes et le maximum de limite de tolérance aux pannes est de 4.
